# EUROPEAN PATENT SPECIFICATION

(11) **EP 2 284 587 B1**
(45) Date of publication and mention of the grant of the patent: **21.03.2018**
(21) Application number: 10171584.5
(22) Date of filing: 02.08.2010
(51) Int. Cl.: G02B 6/44

(54) **TIGHT-BUFFERED OPTICAL FIBER UNIT HAVING IMPROVED ACCESSIBILITY**
FEST GEPUFFERTE GLASFASEREINHEIT MIT VERBESSERTER ZUGÄNGLICHKEIT
UNITÉ À FIBRES OPTIQUES ÉTROITEMENT TAMPONNÉES DOTÉE D'UNE PLUS GRANDE ACCESSIBILITÉ

(30) Priority: 31.07.2009 US 230158 P
(43) Date of publication of application: 16.02.2011
(73) Proprietor: Draka Comteq B.V., 1083 HJ Amsterdam (NL)
(72) Inventor: Risch, Brian George, Hickory, NC 28601 (US); Perttunen, Timo, DK-2605 Brøndby (DK)
(74) Representative: Algemeen Octrooi- en Merkenbureau B.V.

(56) References cited:
- EP-A1- 0 527 266
- EP-A2- 1 298 477
- WO-A1-2009/062131
- WO-A2-2004/015475
- US-B1- 7 006 740

## Description

The present invention relates to the field of tight or semi-tight buffering units for optical fibres, said units having improved accessibility.

Within fiber optic networks, tight and semi-tight buffered optical fibers are commonly employed in various applications where space is limited. For example, tight and semi-tight buffered optical fibers are often used in pigtails (*i.e*., short patch cables) and passive devices (e.g., optical fiber splitters, couplers, and attenuators) where additional protection is desired for individual optical fibers.

One problem encountered when using tightly buffered optical fibers is that of accessibility. It is desirable to be able to remove the protective buffer tube quickly, so that the enclosed optical fiber can be readily accessed.

A conventional solution for providing improved accessibility is to provide a gap between the buffer tube and the enclosed optical fiber.

This gap is often filled with a lubricant to reduce friction between the optical fiber and the surrounding buffer tube. Using a lubricant layer, however, can be difficult from a manufacturing standpoint, because a lubricant layer requires additional tooling and high precision.

If an air-filled gap is employed, the buffer tube may be susceptible to the ingress of water. Those of ordinary skill will appreciate that water infiltrating the buffer tube, for example, may freeze, which, *inter alia*, can contribute to optical fiber attenuation. Moreover, the air-filled gap provides space that can allow the enclosed optical fiber to buckle or otherwise bend, which in turn can lead to undesirable attenuation.

Accordingly, it would be desirable to have a more tightly buffered optical fiber having improved accessibility and not requiring a substantial gap between the buffer tube and the enclosed optical fiber.

The present invention relates to tight-buffered and semi-tight-buffered optical fiber units having respective geometries that facilitate exceptional accessibility (*e.g*., stripping performance), while maintaining low attenuation.

The present invention relates to a buffered optical fiber unit, comprising:
an optical fiber, comprising a glass fiber contiguously surrounded by a optical-fiber coating including one or more coating layers; and
a polymeric buffering layer surrounding the optical fiber, the polymeric buffering layer defining an inner surface, the polymeric buffering layer including an aliphatic amide slip agent in an amount sufficient for at least some of the aliphatic amide slip agent to migrate to the inner surface of the polymeric buffering layer so that at least 15 centimeters of the polymeric buffering layer can be removed from the optical fiber in a single operation using a strip force of less than 10 N;
wherein the inner diameter of the polymeric buffering layer is no more than 60 microns greater than the outer diameter of the optical fiber.

In an embodiment, the buffered optical fiber unit comprises one single optical fiber.

In an embodiment, the buffered optical fiber unit is a semi-tight buffered optical fiber unit wherein the buffered optical fiber unit further comprises a buffering gap between the optical fiber and the polymeric buffering layer.

In an embodiment, the buffered optical fiber unit is a tight-buffered optical fiber unit wherein th outer diameter of the optical fiber and the inner diameter of the polymeric buffering layer are essentially the same.

In an embodiment of the tight-buffered optical fiber unit, the optical fiber is a multimode optical fiber complying with the ITU-T G.651.1 recommendation; the multimode optical fiber has macrobending losses greater than 0.1 dB at a wavelength of 850 nanometers for a winding of two turns around a spool with a bending radius of 15 millimeters; the multimode optical fiber has macrobending losses greater than 0.3 dB at a wavelength of 1300 nanometers for a winding of two turns around a spool with a bending radius of 15 millimeters; and, the optical fiber unit has, at a wavelength of 1300 nanometers, attenuation less than 0.6 dB/km as measured at -5°C after performing two temperature cycles from -5°C to 60°C.

In an embodiment of the tight-buffered optical fiber unit, the optical fiber is a single-mode optical fiber; and as measured at -5°C after performing two temperature cycles from -40°C to 70°C, the optical fiber unit has attenuation (i) less than 0.5 dB/km at a wavelength of 1310 nanometers and (ii) less than 0.3 dB/km at a wavelength of 1550 nanometers.

In an embodiment of the buffered optical fiber unit according to the present invention, the inner diameter of the polymeric buffering layer is no more than 30 microns greater than the outer diameter of the optical fiber. Preferably, at least about 50 centimeters of the polymeric buffering layer can be removed from the optical fiber in a single operation using a strip force of less than 5 N. Also preferably, at least about 100 centimeters of the polymeric buffering layer can be removed from the optical fiber in a single operation using a strip force of less than 10 N.

In an embodiment of the buffered optical fiber unit wherein the inner diameter of the polymeric buffering layer is no more than 30 microns greater than the outer diameter of the optical fiber, the optical fiber is a single-mode optical fiber that (i) complies with the ITU-T G.652.D recommendation but (ii) complies with neither the ITU-T G.657.A recommendation nor the ITU-T G.657.B recommendation; and as measured at -5°C after performing two temperature cycles from -5°C to 60°C, the optical fiber unit has attenuation (i) less than 0.5 dB/km at a wavelength of 1310 nanometers and (ii) less than 0.3 dB/km at a wavelength of 1550 nanometers.

In an embodiment of the buffered optical fiber unit according to the present invention, at least 30 centimeters of the polymeric buffering layer can be removed from the optical fiber in a single operation using a strip force of less than 10 N.

In an embodiment of the buffered optical fiber unit according to the present invention, the optical fiber is a multimode optical fiber complying with the ITU-T G.651.1 recommendation; the multimode optical fiber has macrobending losses greater than 0.1 dB at a wavelength of 850 nanometers for a winding of two turns around a spool with a bending radius of 15 millimeters; the multimode optical fiber has macrobending losses greater than 0.3 dB at a wavelength of 1300 nanometers for a winding of two turns around a spool with a bending radius of 15 millimeters; and the optical fiber unit has, at a wavelength of 1300 nanometers, attenuation less than 1 dB/km as measured at -5°C after performing two temperature cycles from -5°C to 60°C.

In an embodiment of the buffered optical fiber unit according to the present invention, the polymeric buffering layer has a Shore A hardness of at least 90.

In an embodiment of the buffered optical fiber unit according to the present invention, the aliphatic amide slip agent is incorporated into the polymeric buffering layer in an amount less than 5000 ppm, preferably less than 3000 ppm.

In an embodiment of the buffered optical fiber unit according to the present invention, the aliphatic amide slip agent is incorporated into the polymeric buffering layer in an amount between 200 ppm and 2000 ppm.

In an embodiment of the buffered optical fiber unit according to the present invention, the aliphatic amide slip agent is incorporated into the polymeric buffering layer in an amount between 750 ppm and 1250 ppm.

In one aspect, the present invention embraces a tight-buffered optical fiber unit. The tight-buffered optical fiber unit includes an optical fiber (*i.e*., a glass fiber surrounded by one or more coating layers). A polymeric buffering layer tightly surrounds the optical fiber to define a fiber-buffer interface. The buffering layer includes a slip agent (*e.g*., an aliphatic amide) in an amount sufficient for at least some of the slip agent to migrate to the buffer-fiber interface. The slip agent promotes easy stripping of the buffering layer, despite the tight geometry of the tight-buffered optical fiber unit. In this regard, at least about 15 centimeters of the polymeric buffering layer can be removed (*e.g*., stripped) from the optical fiber in a single operation using a strip force of less than about 10 N (*e.g*., about 4 N or less).

In another aspect, the present invention embraces a semi-tight-buffered optical fiber unit. The semi-tight buffered optical fiber unit includes an optical fiber (*i.e*., a glass fiber surrounded by one or more coating layers). A polymeric buffering layer surrounds the optical fiber to define an annular gap therebetween. As compared with conventional semi-tight structures, the present semi-tight-buffered optical fiber unit can employ a significantly narrower gap between the optical fiber and the surrounding buffering layer, while maintaining good accessibility. The buffering layer includes a slip agent (*e.g*., an aliphatic amide) in an amount sufficient for at least some of the slip agent to migrate to the buffer-fiber interface (*e.g*., the narrow gap between the buffering layer and the optical fiber). The slip agent promotes easy stripping of the buffering layer, despite the semi-tight-buffered optical fiber unit having a significantly narrower gap than conventional semi-tight structures. Here, too, at least about 15 centimeters (*e.g*., at least about 35 centimeters, such as at least about 75 centimeters) of the polymeric buffering layer can be removed from the optical fiber in a single operation using a strip force of less than about 10 N (*e.g*., about 5 N or less).

In either aspect, the buffered optical fiber can be either a multimode optical fiber (MMF) or a single-mode optical fiber (SMF).

The foregoing illustrative summary, as well as other exemplary objectives and/or advantages of the invention, and the manner in which the same are accomplished, are further explained within the following detailed description and its accompanying drawings, wherein:
Figure 1 schematically depicts an exemplary tight-buffered optical fiber unit according to the present invention.
Figure 2 schematically depicts an exemplary semi-tight-buffered optical fiber unit according to the present invention.

The present invention will be described in more detail below. The present invention provides buffer tube structures that provide enhanced accessibility to a buffered optical fiber (*e.g*., an optical fiber tightly or semi-tightly surrounded by a polymeric buffering layer). In particular, the buffering layer (*i.e*., buffer tube) is doped with a sufficient concentration of slip agent to provide a reduced-friction interface between the buffer tube and its enclosed optical fiber.

The present invention relates to a tight-buffered optical fiber unit, comprising: an optical fiber comprising a glass fiber surrounded by a optical-fiber coating including one or more coating layers; and a polymeric buffering layer tightly surrounding the optical fiber to define a fiber-buffer interface, the polymeric buffering layer including an aliphatic amide slip agent in an amount sufficient for at least some of the aliphatic amide slip agent to migrate to the fiber-buffer interface and thereby promote easy stripping of the polymeric buffering layer; wherein at least about 15 centimeters of the polymeric buffering layer can be removed from the optical fiber in a single operation using a strip force of less than about 10 N. The optical-fiber coating may include a primary coating layer surrounding the glass fiber and a secondary coating layer surrounding the primary coating layer. The optical-fiber coating may include an ink layer surrounding the secondary coating layer. The outer diameter of the optical fiber and the inner diameter of the polymeric buffering layer may be essentially the same. The polymeric buffering layer may have a Shore A hardness of at least about 90. The polymeric buffering layer may predominately comprise a polyolefin; and the aliphatic amide slip agent may possess low solubility within the polyolefin to facilitate the migration of the aliphatic amide slip agent to the fiber-buffer interface. The aliphatic amide slip agent is typically incorporated into the polymeric buffering layer in an amount less than about 3000 ppm. The aliphatic amide slip agent may be incorporated into the polymeric buffering layer in an amount between about 750 ppm and 1250 ppm. Preferably, the at least about 20 centimeters of the polymeric buffering layer can be removed from the optical fiber in a single operation using a strip force of less than about 5 N. More preferably, the at least about 30 centimeters of the polymeric buffering layer can be removed from the optical fiber in a single operation using a strip force of less than about 10 N. The optical fiber may be multimode optical fiber complying with the ITU-T G.651.1 recommendation; and the optical fiber unit may have, at a wavelength of 1300 nanometers, attenuation less than about 1 dB/km as measured at -5°C after performing two temperature cycles from -5°C to 60°C. The multimode optical fiber may have macrobending losses greater than 0.1 dB at a wavelength of 850 nanometers for a winding of two turns around a spool with a bending radius of 15 millimeters; and the multimode optical fiber may have macrobending losses greater than 0.3 dB at a wavelength of 1300 nanometers for a winding of two turns around a spool with a bending radius of 15 millimeters. The optical fiber may be multimode optical fiber complying with the ITU-T G.651.1 recommendation; and the optical fiber unit may have, at a wavelength of 1300 nanometers, attenuation less than about 0.6 dB/km as measured at -5°C after performing two temperature cycles from -5°C to 60°C. The multimode optical fiber may have macrobending losses greater than 0.1 dB at a wavelength of 850 nanometers for a winding of two turns around a spool with a bending radius of 15 millimeters; and the multimode optical fiber may have macrobending losses greater than 0.3 dB at a wavelength of 1300 nanometers for a winding of two turns around a spool with a bending radius of 15 millimeters. The optical fiber may be a single-mode optical fiber; and as measured at -5°C after performing two temperature cycles from -40°C to 70°C, the optical fiber unit may have attenuation (*i*) less than about 0.5 dB/km at a wavelength of 1310 nanometers and (*ii*) less than about 0.3 dB/km at a wavelength of 1550 nanometers.

The present invention relates to a method for manufacturing an optical fiber unit described above, comprising: incorporating an aliphatic amide slip agent into a polymeric composition to form a polymeric buffering compound; and extruding the polymeric buffering compound continuously around the optical fiber to form the optical fiber unit. The step of incorporating an aliphatic amide slip agent into a polymeric composition may comprise incorporating into a polyolefin an aliphatic amide slip agent that has sufficiently low solubility within the polyolefin to promote the migration of the aliphatic amide slip agent to the fiber-buffer interface during and/or after the extrusion step.

The present invention relates to a semi-tight-buffered optical fiber unit, comprising: an optical fiber comprising a glass fiber surrounded by a optical-fiber coating including one or more coating layers; and a polymeric buffering layer surrounding the optical fiber to define an annular gap therebetween, the polymeric buffering layer including an aliphatic amide slip agent in an amount sufficient for at least some of the aliphatic amide slip agent to migrate to the annular gap and thereby promote easy stripping of the polymeric buffering layer; wherein at least about 25 centimeters of the polymeric buffering layer can be removed from the optical fiber in a single operation using a strip force of less than about 10 N. The optical-fiber coating may include a primary coating layer surrounding the glass fiber and a secondary coating layer surrounding the primary coating layer. The optical-fiber coating may include an ink layer surrounding the secondary coating layer. The inner diameter of the polymeric buffering layer may be no more than about 30 microns greater than the outer diameter of the optical fiber. The polymeric buffering layer may have a Shore A hardness of at least about 90. The polymeric buffering layer may predominately comprise a polyolefin. The aliphatic amide slip agent may be incorporated into the polymeric buffering layer in an amount between about 200 ppm and 2000 ppm. Preferably, at least about 50 centimeters of the polymeric buffering layer can be removed from the optical fiber in a single operation using a strip force of less than about 5 N. More preferably, at least about 100 centimeters of the polymeric buffering layer can be removed from the optical fiber in a single operation using a strip force of less than about 10 N. The optical fiber may be a multimode optical fiber complying with the ITU-T G.651.1 recommendation; and the optical fiber unit may have, at a wavelength of 1300 nanometers, attenuation less than about 1 dB/km as measured at -5°C after performing two temperature cycles from -5°C to 60°C. The multimode optical fiber may have macrobending losses greater than 0.1 dB at a wavelength of 850 nanometers for a winding of two turns around a spool with a bending radius of 15 millimeters; and the multimode optical fiber may have macrobending losses greater than 0.3 dB at a wavelength of 1300 nanometers for a winding of two turns around a spool with a bending radius of 15 millimeters. The optical fiber may be a multimode optical fiber complying with the ITU-T G.651.1 recommendation; and the optical fiber unit may have, at a wavelength of 1300 nanometers, attenuation less than about 0.8 dB/km as measured at -5°C after performing two temperature cycles from -5°C to 60°C. The multimode optical fiber may have macrobending losses greater than 0.1 dB at a wavelength of 850 nanometers for a winding of two turns around a spool with a bending radius of 15 millimeters; and the multimode optical fiber may have macrobending losses greater than 0.3 dB at a wavelength of 1300 nanometers for a winding of two turns around a spool with a bending radius of 15 millimeters. The optical fiber may be a single-mode optical fiber; and as measured at -5°C after performing two temperature cycles from -5°C to 60°C, the optical fiber unit may have attenuation (*i*) less than about 0.5 dB/km at a wavelength of 1310 nanometers and (*ii*) less than about 0.3 dB/km at a wavelength of 1550 nanometers. The single-mode optical fiber may (i) comply with the ITU-T G.652.D recommendation but (*ii*) comply with neither the ITU-T G.657.A recommendation nor the ITU-T G.657.B recommendation.

Exemplary slip agents include aliphatic amides, particularly amides of unsaturated fatty acids (*e.g*., oleic acid). Exemplary aliphatic amide slip agents include oleamide (C₁₈H₃₅NO) and erucamide (C₂₂H₄₃NO). A suitable oleamide-based slip agent is 075840JUMB Slipeze, which is commercially available from PolyOne Corporation.

The buffer tube is doped with the slip agent in an amount sufficient for at least some of the slip agent to migrate (*i.e*., bloom) to the inner surface of the buffer tube. Typically, the slip agent is incorporated into the buffer tube in a concentration less than about 5000 parts per million (ppm) (*e.g*., less than about 3000 ppm, such as less than about 1500 ppm). More typically, the slip agent is incorporated in the buffer tube in a concentration between about 200 ppm and 2000 ppm (*e.g*., between about 500 ppm and 1250 ppm).

Furthermore, the slip agent may possess low solubility within the buffering material (*i.e*., the material used to form the buffer tube) to facilitate blooming of the slip agent at the inner surface of the buffer tube.

The slip agent promotes easy access to an optical fiber contained within the buffer tube. In other words, the slip agent makes it easier to strip the buffer tube from the optical fiber.

The slip agent may be incorporated into the buffer tube through a masterbatch process.

First, an intermediate masterbatch is created by mixing a carrier material (*e.g*., a polyolefin) with a slip agent. Exemplary carrier materials include low-density polyethylene (LDPE), linear low-density polyethylene (LLDPE), high-density polyethylene (HDPE), and polypropylene (PP). The resulting masterbatch has a slip agent concentration of between about 1 percent and 10 percent (*e.g*., about 5 percent or so).

After the masterbatch is created, it is mixed with a polymeric composition to form a buffering compound. Other additives, such as colorants, may be added to the masterbatch and/or mixed with the polymeric composition.

The masterbatch is typically included within the buffering compound at a concentration of between about 1 percent and 5 percent (*e.g*., between about 3 percent and 3.5 percent), resulting in a slip agent concentration of between about 0.01 percent and 0.5 percent in the buffering compound (*i.e*., between about 100 ppm and 5000 ppm). An exemplary slip agent concentration in the buffering compound might fall between about 750 ppm and 2000 ppm (*e.g*., 1000 ppm to 1500 ppm).

The buffering compound is then extruded (*e.g*., continuously extruded) about an optical fiber. For example, an optical fiber is advanced through an extruder crosshead, which forms an initially molten polymeric buffer tube around the optical fiber. The molten polymeric buffer tube subsequently cools to form a final product.

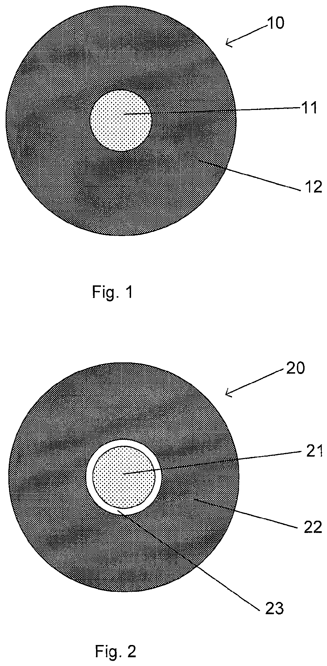

In one aspect schematically depicted in Figure 1, the present invention embraces a tight buffering unit 10 (*i.e*., a tight-buffered optical fiber) having improved accessibility.

The tight buffering unit 10 includes an optical fiber 11 surrounded by a buffering layer 12 (*i.e*., a buffer tube). The buffer tube 12 is formed from a polymeric composition that has been enhanced through the incorporation of a slip agent, which typically possesses low solubility with the polymeric composition to facilitate the migration of the slip agent (*e.g*., an aliphatic amide slip agent) to the fiber-buffer interface. During and after buffer-tube extrusion, at least some of the slip agent migrates to the inner surface of the buffer tube 12. As a result, the interface between the buffer tube 12 and the optical fiber 11 is lubricated. This reduces friction between the optical fiber 11 and the tight buffer tube 12, providing improved accessibility to the optical fiber 11.

The optical fiber 11 is tightly (*i.e*., closely) surrounded by the buffer tube 12. That is, the outer diameter of the optical fiber 11 is approximately equal to the inner diameter of the buffer tube 12. Consequently, there is substantially no space (*e.g*., annular space) between the outer surface of the optical fiber 11 and the inner surface of the buffer tube 12.

In this regard, the buffer tube usually has an inner diameter of between about 0.235 millimeter and 0.265 millimeter. Those of ordinary skill will recognize that an optical fiber (*e.g*., a single-mode optical fiber (SMF) or a multi-mode optical fiber (MMF)) with a primary coating (and an optional secondary coating and/or ink layer) typically has an outer diameter of between about 235 microns (µm) and 265 microns.

Alternatively, the present tight buffering unit may include an optical fiber possessing a reduced diameter (*e.g*., an outermost diameter between about 150 microns and 230 microns). As such, the buffer tube may have an inner diameter of between about 0.15 millimeter and 0.23 millimeter.

The buffer tube typically possesses an outer diameter of between about 0.4 millimeter and 1 millimeter (*e.g*., between about 0.5 millimeter and 0.9 millimeter).

The buffer tube may be formed predominately of polyolefins, such as polyethylene (*e.g*., LDPE, LLDPE, or HDPE) or polypropylene, including fluorinated polyolefins, polyesters (*e.g*., polybutylene terephthalate), polyamides (*e.g*., nylon), ethylene-vinyl acetate (EVA), as well as other polymeric materials and blends. The polymeric materials may include a curable composition (*e.g*., a UV-curable material) or a thermoplastic material.

In this regard, the buffer tube typically has a Shore D hardness of at least about 45 and a Shore A hardness of at least about 90 (*e.g*., a Shore A hardness of greater than about 95). More typically, the buffer tube has a Shore D hardness of at least about 50 (*e.g*., a Shore D hardness of about 55 or more).

An exemplary polymeric composition for use in forming the buffering compound is ECCOH™ 6638, a halogen-free flame-retardant (HFFR) compound that includes polyethylene, EVA, halogen-free flame retardants, and other additives. A buffer tube formed from ECCOH™ 6638 typically has a Shore D hardness of about 53. Another exemplary polymeric composition is ECCOH™ 6150, which is also an HFFR compound. ECCOH™ 6638 and ECCOH™ 6150 are commercially available from PolyOne Corporation.

Other exemplary compositions include MEGOLON™ HF 1876 and MEGOLON™ HF 8142, which are HFFR compounds that are commercially available from Alpha Gary Corporation. A buffer tube formed from MEGOLON™ HF 1876 typically has a Shore A hardness of about 96 and a Shore D hardness of about 58.

In general, the buffer tube may be formed of one or more layers. The layers may be homogeneous or include mixtures or blends of various materials within each layer. For example, the buffer materials may contain additives, such as nucleating agents, flame-retardants, smoke-retardants, antioxidants, UV absorbers, and/or plasticizers. The buffer tube may include a material to provide high temperature resistance and chemical resistance (*e.g*., an aromatic material or polysulfone material).

The buffer tubes according to the present invention typically possess a circular cross section. That said, it is within the scope of the present invention to employ buffer tubes possessing non-circular shapes (*e.g*., an oval or a trapezoidal cross-section) or even somewhat irregular shapes.

In another embodiment schematically depicted in Figure 2, the present invention embraces a semi-tight buffering unit 20 with improved accessibility. The semi-tight buffering unit 20 is similar to the tight buffering unit described above; however, it further includes a buffering gap 23 (*e.g*., an air gap) between the optical fiber 21 and the buffer tube 22.

Typically, the buffering gap is an air gap and, as such, is substantially free of materials other than slip agent that has migrated to the buffering gap.

The buffering gap (*e.g*., an annular gap) may have a thickness less than about 50 microns (*e.g*., about 25 microns). Typically, the buffering gap has a thickness of no more than about 30 microns. In other words, the inner diameter of the buffer tube is typically no more than about 60 microns greater than the outer diameter of the optical fiber it encloses. For example, a buffer tube having an inner diameter of about 0.3 millimeter may enclose an optical fiber having an outer diameter of about 240 microns, resulting in a buffering gap having a thickness of about 30 microns.

As compared with conventional semi-tight structures, the present semi-tight-buffered optical fiber unit may possess a narrower buffering gap between the optical fiber and the buffer tube, yet provide excellent accessibility. For example, the buffering gap may have a thickness of less than about 15 microns (*e.g*., less than about 10 microns). By way of further example, the buffering gap may have a thickness of less than about 5 microns.

The buffering units according to the present invention may contain either a multimode optical fiber or a single-mode optical fiber.

In one embodiment, the present buffering units employ conventional multimode optical fibers having a 50-micron core (*e.g*., OM2 multimode fibers) and complying with the ITU-T G.651.1 recommendation. Exemplary multimode fibers that may be employed include MaxCap™ multimode fibers (OM2+, OM3, or OM4), which are commercially available from Draka (Claremont, North Carolina).

Alternatively, the present data-center cable 10 may include bend-insensitive multimode fibers, such as MaxCap™-BB-OMx multimode fibers, which are commercially available from Draka (Claremont, North Carolina). In this regard, bend-insensitive multimode fibers typically have macrobending losses of (*i*) no more than 0.1 dB at a wavelength of 850 nanometers for a winding of two turns around a spool with a bending radius of 15 millimeters and (*ii*) no more than 0.3 dB at a wavelength of 1300 nanometers for a winding of two turns around a spool with a bending radius of 15 millimeters.

In contrast, conventional multimode fibers, in accordance with the ITU-T G.651.1 standard, have macrobending losses of (*i*) no more than 1 dB at a wavelength of 850 nanometers for a winding of two turns around a spool with a bending radius of 15 millimeters and (*ii*) no more than 1 dB at a wavelength of 1300 nanometers for a winding of two turns around a spool with a bending radius of 15 millimeters. Moreover, as measured using a winding of two turns around a spool with a bending radius of 15 millimeters, conventional multimode fibers typically have macrobending losses of (*i*) greater than 0.1 dB, more typically greater than 0.2 dB (*e.g*., 0.3 dB or more), at a wavelength of 850 nanometers and (*ii*) greater than 0.3 dB, more typically greater than 0.4 dB (*e.g*., 0.5 dB or more), at a wavelength of 1300 nanometers.

In another embodiment, the optical fibers employed in the present buffering units are conventional standard single-mode fibers (SSMF). Suitable single-mode optical fibers (*e.g*., enhanced single-mode fibers (ESMF)) that are compliant with the ITU-T G.652.D requirements are commercially available, for instance, from Draka (Claremont, North Carolina).

In another embodiment, bend-insensitive single-mode fibers may be employed in the buffering units according to the present invention. Bend-insensitive optical fibers are less susceptible to attenuation (*e.g*., caused by microbending or macrobending). Exemplary single-mode glass fibers for use in the present buffer tubes are commercially available from Draka (Claremont, North Carolina) under the trade name BendBright®, which is compliant with the ITU-T G.652.D recommendation. That said, it is within the scope of the present invention to employ a bend-insensitive glass fiber that meets the ITU-T G.657.A standard and/or the ITU-T G.657.B standard.

In this regard, exemplary bend-insensitive single-mode glass fibers for use in the present invention are commercially available from Draka (Claremont, North Carolina) under the trade name BendBright^{XS}®, which is compliant with both the ITU-T G.652.D and ITU-T G.657.A/B recommendations. BendBright^{XS}® optical fibers demonstrate significant improvement with respect to both macrobending and microbending.

As set forth in International Patent Application No. PCT/US08/82927 for a *Microbend-Resistant Optical Fiber*, filed November 9, 2008, of the present applicant (and its counterpart International Patent Application Publication No. WO 2009/062131 A1), and U.S. Patent Application No. 12/267,732 for a *Microbend-Resistant Optical Fiber*, filed November 10, 2008, of the present applicant (and its counterpart U.S. Patent Application Publication No. US2009/0175583 A1), pairing a bend-insensitive glass fiber (*e.g*., Draka's single-mode glass fibers available under the trade name BendBright^{XS}®) and a primary coating having very low modulus achieves optical fibers having exceptionally low losses (*e.g*., reductions in microbend sensitivity of at least 10x as compared with a single-mode fiber employing a conventional coating system). The optical fiber units according to the present invention may employ the coatings disclosed in paragraphs 51, 52 and 55 and in the Examples of International Patent Application No. PCT/US08/82927 (WO 2009/062131) and as disclosed in paragraphs 37-38 and 50-54 and in the Examples of U.S. Patent Application No. 12/267,732 (US 2009/0175583) with either single-mode optical fibers or multimode optical fibers.

The optical fibers employed with the present buffering units may also comply with the IEC 60793 and IEC 60794 standards.

As previously noted, optical fibers typically have an outer diameter of between about 235 microns and 265 microns, although optical fibers having a smaller diameter are within the scope of the present invention.

By way of example, the component glass fiber may have an outer diameter of about 125 microns. With respect to the optical fiber's surrounding coating layers, the primary coating may have an outer diameter of between about 175 microns and 195 microns (*i.e*., a primary coating thickness of between about 25 microns and 35 microns), and the secondary coating may have an outer diameter of between about 235 microns and 265 microns (*i.e*., a secondary coating thickness of between about 20 microns and 45 microns). Optionally, the optical fiber may include an outermost ink layer, which is typically between two and ten microns.

The buffering units according to the present invention have superior attenuation performance compared to conventional buffering units having similar accessibility. For example, tight buffering units according to the present invention have similar accessibility to conventional semi-tight buffering units, but have superior attenuation performance.

Accessibility is tested by determining the length of the buffer tube that can be removed in a single operation, thereby allowing access to the optical fiber inside. Accessibility testing is typically performed about 24 hours after the buffer tube has been extruded to ensure that at least a portion of the slip agent has bloomed from the buffer tube.

In this regard, typically at least about 15 centimeters (*e.g*., at least about 25 centimeters) of the buffer tube of a tight or semi-tight buffering unit in accordance with the present invention can be removed in a single operation (*i.e*., in one piece) using a strip force of less than about 10 N, such as less than about 8 N (*e.g*., less than about 5 N). In a particular embodiment, at least about 50 centimeters (*e.g*., one meter or more) of the buffer tube of a semi-tight buffering unit can be removed in a single operation using a strip force of less than about 10 N, such as less than about 8 N (*e.g*., no more than about 6 N). In another particular embodiment, at least about 20 centimeters (*e.g*., greater than 30 centimeters) of the buffer tube of a tight buffering unit can be removed in a single operation using a strip force of less than about 10 N, such as less than about 6 N (*e.g*., about 4 N).

Accordingly, the optical fiber inside the present buffering units can be quickly accessed. For example, the present buffering units are capable of having about one meter of buffer tube removed in no more than one minute, typically in one or two pieces.

As noted, the buffering units according to the present invention have superior attenuation performance. In this regard, the attenuation of buffering units can be measured using temperature cycle testing. For example, a sample of a buffering unit may be temperature cycled from -5°C to 60°C. This temperature cycling is typically performed twice on the sample (*i.e*., two cycles from -5°C to 60°C).

Alternatively, more rigorous temperature cycling may be performed (*e.g*., two cycles from -20°C to 60°C or two cycles from -40°C to 60°C). In addition, further temperature cycling (*e.g*., two cycles from -40°C to 70°C) after the initial temperature cycling may be performed.

After temperature cycling, the attenuation of the optical fiber contained within the tight buffering unit is typically measured at -5°C. For a multimode fiber, attenuation is often measured at a wavelength of 1300 nanometers. Multimode-fiber tight buffering units (*e.g*., containing a conventional multimode fiber) according to the present invention typically have attenuation less than about 1 dB/km, more typically less than about 0.8 dB/km (*e.g*., about 0.6 dB/km or less), measured at -5°C after performing two temperature cycles from -5°C to 60°C. Furthermore, multimode-fiber tight buffering units in accordance with the present invention typically have attenuation of no more than about 2.7 dB/km at a wavelength of 850 nanometers and no more than about 0.8 dB/km at a wavelength of 1300 nanometers, measured at -5°C after performing two temperature cycles from -40°C to 70°C.

The attenuation of tight buffering units containing single-mode optical fibers (*e.g*., conventional single-mode optical fibers) is typically no more than about 0.5 dB/km (*e.g*., less than about 0.39 dB/km) at a wavelength of 1310 nanometers and no more than about 0.30 dB/km (*e.g*., 0.25 dB/km or less) at a wavelength of 1550 nanometers, measured at -5°C after performing two temperature cycles from -40°C to 70°C.

Table 1 (below) depicts representative attenuation data from exemplary tight buffering units. These exemplary buffering units contain a conventional multimode fiber having a 50-micron core and an outer diameter of about 240 microns. Examples 4 and 5 are comparative, conventional semi-tight buffering units.

**Table 1 (Conventional MMF Attenuation in Tight Buffering Units)**

| | Ex. 1 | Ex. 2 | Ex. 3 | Comp. Ex. 4 | Comp. Ex. 5 |
|---|---|---|---|---|---|
| Buffer Tube | 0.9 | 0.9 | 0.9 | 0.9 | 0.9 |
| Outer Diameter (mm) | | | | | |
| Buffer Tube | 0.24 | 0.24 | 0.24 | 0.30 | 0.30 |
| Inner Diameter (mm) | | | | | |
| Buffering gap | N/A | N/A | N/A | Air | Lubricant |
| Buffering Material | ECCOH™ 6638 | ECCOH™ 6638 | ECCOH™ 6638 | ECCOH™ 6638 | ECCOH™ 6638 |
| Slip Agent | 075840JU MB Slipeze | 075840JU MB Slipeze | 075840JU MB Slipeze | N/A | N/A |
| Slip Agent Concentration (ppm) | 500 | 1000 | 2000 | N/A | N/A |
| Attenuation (dB/km at 1300 nm) | | 053 | | 0.98 | 1.77 |
| Two cycles -5°C to 60°C | | | | | |
| Attenuation (dB/km at 1300 nm) | | 0.75 | | 2.12 | 11.44 |
| Two cycles -40°C to 60°C | | | | | |
| Attenuation (dB/km at 1300 nm) | 0.92 | 0.98 | 0.91 | 10.97 | |
| Two cycles -20°C to 60°C & Two cycles -40°C to 70°C. | | | | | |

Moreover, attenuation performance has been measured with respect to exemplary semi-tight buffering units in accordance with the present invention. In measuring attenuation performance, semi-tight buffering units containing either one multimode optical fiber or one single-mode optical fiber were subjected to two temperature cycles from -5°C to 60°C. For semi-tight buffering units containing conventional multimode fibers (*e.g*., with a 50-micron core), attenuation at a wavelength of 1300 nanometers typically was no more than about 0.8 dB/km. Furthermore, the attenuation of semi-tight buffering units containing single-mode optical fibers was no more than about 0.5 dB/km (*e.g*., less than about 0.39 dB/km) at a wavelength of 1310 nanometers and no more than about 0.30 dB/km (*e.g*., 0.25 dB/km or less) at a wavelength of 1550 nanometers. Table 2 (below) depicts representative attenuation data from exemplary semi-tight buffering units.

**Table 2 (Attenuation in Semi-Tight Buffering Units)**

| | Ex. 6 | Ex. 7 | Ex. 8 | Ex. 9 | Ex. 10 | Ex. 11 |
|---|---|---|---|---|---|---|
| Buffer Tube | 0.9 | 0.9 | 0.9 | 09 | 0.9 | 0.9 |
| Outer Diameter (mm) | | | | | | |
| Buffer Tube | 0.30 | 0.30 | 0.30 | 0.33 | 0.30 | 0.30 |
| Inner Diameter (mm) | | | | | | |
| Buffering Material | ECCOH™ 6638 | ECCOH™ 6638 | ECCOH™ 6638 | ECCOH™ 6638 | ECCOH™ 6638 | ECCOH™ 6638 |
| Slip Agent | 075840 JUMB Slipeze | 075840 JUMB Slipeze | 075840 JUMB Slipeze | 075840 JUMB Slipeze | 075840 JUMB Slipeze | 075840 JUMB Slipeze |
| Slip Agent Concentration (ppm) | 3500 | 3500 | 3500 | 3500 | 3500 | 3500 |
| Type of Optical Fiber | Conventional OM1 | Convertional OM2 | Max-Cap™ OM3 | Max-Cap™ OM4 | ESMF | Bend-Bright^{XS} |
| Attenuation (dB/km at 850 nm) | ≤3.2 | ≤2.7 | ≤2.7 | ≤2.7 | N/A | N/A |
| Two cycles -5°C to 60°C | | | | | | |
| Attenuation (dB/km at 1300 nm) | ≤1.0 | ≤0.8 | ≤0.8 | ≤0.8 | N/A | N/A |
| Two cycles -5°C to 60°C | | | | | | |
| Attenuation (dB/km at 13 10 nm) | N/A | N/A | N/A | N/A | ≤0.39 | ≤0.39 |
| Two cycles -5°C to 60°C | | | | | | |
| Attenuation (dB/km at 1550 nm) | N/A | N/A | N/A | N/A | ≤0.25 | ≤0.25 |
| Two cycles -5°C to 60°C | | | | | | |

One or more buffering units according to the present invention may be positioned within a fiber optic cable.

In this regard, a plurality of the present buffering units may be positioned externally adjacent to and stranded around a central strength member. This stranding can be accomplished in one direction, helically, known as "S" or "Z" stranding, or Reverse Oscillated Lay stranding, known as "S-Z" stranding. Stranding about the central strength member reduces optical fiber strain when cable strain occurs during installation and use.

Those having ordinary skill in the art will understand the benefit of minimizing fiber strain for both tensile cable strain and longitudinal compressive cable strain during installation or operating conditions.

With respect to tensile cable strain, which may occur during installation, the cable will become longer while the optical fibers can migrate closer to the cable's neutral axis to reduce, if not eliminate, the strain being translated to the optical fibers. With respect to longitudinal compressive strain, which may occur at low operating temperatures due to shrinkage of the cable components, the optical fibers will migrate farther away from the cable's neutral axis to reduce, if not eliminate, the compressive strain being translated to the optical fibers.

In a variation, two or more substantially concentric layers of buffer tubes may be positioned around a central strength member. In a further variation, multiple stranding elements (*e.g*., multiple buffering units stranded around a strength member) may themselves be stranded around each other or around a primary central strength member.

Alternatively, a plurality of the present buffering units may be simply placed externally adjacent to the central strength member (*i.e*., the buffering units are not intentionally stranded or arranged around the central strength member in a particular manner and run substantially parallel to the central strength member).

In another cabling embodiment, multiple buffering units may be stranded around themselves without the presence of a central member. These stranded buffering units may be surrounded by a protective tube. The protective tube may serve as the outer casing of the fiber optic cable or may be further surrounded by an outer sheath. The protective tube may tightly or loosely surround the stranded buffer tubes.

As will be known to those having ordinary skill in the art, additional elements may be included within a cable core. For example, copper cables or other active, transmission elements may be stranded or otherwise bundled within the cable sheath. By way of further example, passive elements may be placed outside the buffer tubes between the respective exterior walls of the buffering units and the interior wall of the cable jacket.

In this regard, yarns, nonwovens, fabrics (*e.g*., tapes), foams, or other materials containing water-swellable material and/or coated with water-swellable materials (*e.g*., including super absorbent polymers (SAPs), such as SAP powder) may be employed to provide water blocking.

As will be understood by those having ordinary skill in the art, a cable enclosing buffering units as disclosed herein may have a sheath formed from various materials in various designs. Cable sheathing may be formed from polymeric materials such as, for example, polyethylene, polypropylene, polyvinyl chloride (PVC), polyamides (*e.g*., nylon), polyester (*e.g*., PBT), fluorinated plastics (*e.g*., perfluorethylene propylene, polyvinyl fluoride, or polyvinylidene difluoride), and ethylene vinyl acetate. By way of example, the sheath may be formed from MEGOLON™ S540, a halogen-free thermoplastic material commercially available from Alpha Gary Corporation. The sheath materials may also contain other additives, such as nucleating agents, flame-retardants, smoke-retardants, antioxidants, UV absorbers, and/or plasticizers.

The cable sheathing may be a single jacket formed from a dielectric material (*e.g*., nonconducting polymers), with or without supplemental structural components that may be used to improve the protection (*e.g*., from rodents) and strength provided by the cable sheath. For example, one or more layers of metallic (*e.g*., steel) tape along with one or more dielectric jackets may form the cable sheathing. Metallic or fiberglass reinforcing rods (*e.g*., GRP) may also be incorporated into the sheath. In addition, aramid, fiberglass, or polyester yarns may be employed under the various sheath materials (*e.g*., between the cable sheath and the cable core), and/or ripcords may be positioned, for example, within the cable sheath.

Similar to buffer tubes, optical fiber cable sheaths typically have a circular cross section, but cable sheaths alternatively may have an irregular or non-circular shape (*e.g*., an oval, trapezoidal, or flat cross-section).

In general and as will be known to those having ordinary skill in the art, a strength member is typically in the form of a rod or braided/helically wound wires or fibers, though other configurations will be within the knowledge of those having ordinary skill in the art.

Optical fiber cables containing buffering units as disclosed may be variously deployed, including as drop cables, distribution cables, feeder cables, trunk cables, and stub cables, each of which may have varying operational requirements (*e.g*., temperature range, crush resistance, UV resistance, and minimum bend radius).

Such optical fiber cables may be installed within ducts, microducts, plenums, or risers. By way of example, an optical fiber cable may be installed in an existing duct or microduct by pulling or blowing (*e.g*., using compressed air). An exemplary cable installation method is disclosed in U.S. Patent Application Publication No. US2007/0263960 for a *Communication Cable Assembly and Installation Method* of the present applicant, and U.S. Patent Application Publication No. US2008/0317410 for a *Modified Pre-Ferrulized Communication Cable Assembly and Installation Method* also of the present applicant.

As noted, the present buffering units may be stranded (*e.g*., around a central strength member). In such configurations, an optical fiber cable's protective outer sheath may have a textured outer surface that periodically varies lengthwise along the cable in a manner that replicates the stranded shape of the underlying buffer tubes. The textured profile of the protective outer sheath can improve the blowing performance of the optical fiber cable. The textured surface reduces the contact surface between the cable and the duct or microduct and increases the friction between the blowing medium (*e.g*., air) and the cable. The protective outer sheath may be made of a low coefficient-of-friction material, which can facilitate blown installation. Moreover, the protective outer sheath can be provided with a lubricant to further facilitate blown installation.

In general, to achieve satisfactory long-distance blowing performance (*e.g*., between about 3,000 to 5,000 feet or more), the outer cable diameter of an optical fiber cable should be no more than about seventy to eighty percent of the duct's or microduct's inner diameter.

Moreover, the optical fiber cables may be directly buried in the ground or, as an aerial cable, suspended from a pole or pylon. An aerial cable may be self-supporting, or secured or lashed to a support (*e.g*., messenger wire or another cable). Exemplary aerial fiber optic cables include overhead ground wires (OPGW), all-dielectric self-supporting cables (ADSS), all dielectric lash cables (AD-Lash), and figure-eight cables, each of which is well understood by those having ordinary skill in the art. (Figure-eight cables and other designs can be directly buried or installed into ducts, and may optionally include a toning element, such as a metallic wire, so that they can be found with a metal detector.

To effectively employ optical fibers in a transmission system, connections are required at various points in the network. Optical fiber connections are typically made by fusion splicing, mechanical splicing, or mechanical connectors.

The mating ends of connectors can be installed to the fiber ends either in the field (*e.g*., at the network location) or in a factory prior to installation into the network. The ends of the connectors are mated in the field in order to connect the fibers together or connect the fibers to the passive or active components. For example, certain optical fiber cable assemblies (*e.g*., furcation assemblies) can separate and convey individual optical fibers from a multiple optical fiber cable to connectors in a protective manner.

The deployment of such optical fiber cables may include supplemental equipment. For instance, an amplifier may be included to improve optical signals. Dispersion compensating modules may be installed to reduce the effects of chromatic dispersion and polarization mode dispersion. Splice boxes, pedestals, and distribution frames, which may be protected by an enclosure, may likewise be included. Additional elements include, for example, remote terminal switches, optical network units, optical splitters, and central office switches.

A cable containing the present buffering units may be deployed for use in a communication system (*e.g*., networking or telecommunications). A communication system may include fiber optic cable architecture such as fiber-to-the-node (FTTN), fiber-to-the-telecommunications enclosure (FTTE), fiber-to-the-curb (FTTC), fiber-to-the-building (FTTB), and fiber-to-the-home (FTTH), as well as long-haul or metro architecture. Moreover, an optical module or a storage box that includes a housing may receive a wound portion of an optical fiber. By way of example, the optical fiber may be wound with a bending radius of less than about 15 millimeters (*e.g*., 10 millimeters or less, such as about 5 millimeters) in the optical module or the storage box.

In the specification and/or figures, typical embodiments of the invention have been disclosed. The present invention is not limited to such exemplary embodiments. The figures are schematic representations and so are not necessarily drawn to scale. Unless otherwise noted, specific terms have been used in a generic and descriptive sense and not for purposes of limitation. Further embodiments of the present invention are set forth in the claims.

## Claims

1. A buffered optical fiber unit, comprising:
an optical fiber, comprising a glass fiber contiguously surrounded by a optical-fiber coating including one or more coating layers; and
a polymeric buffering layer surrounding the optical fiber, the polymeric buffering layer defining an inner surface, the polymeric buffering layer including an aliphatic amide slip agent in an amount sufficient for at least some of the aliphatic amide slip agent to migrate to the inner surface of the polymeric buffering layer so that at least 15 centimeters of the polymeric buffering layer can be removed from the optical fiber in a single operation using a strip force of less than 10 N;
wherein the inner diameter of the polymeric buffering layer is no more than 60 microns greater than the outer diameter of the optical fiber.

2. An optical fiber unit according to Claim 1, wherein the buffered optical fiber unit is a semi-tight buffered optical fiber unit wherein the buffered optical fiber unit further comprises a buffering gap between the optical fiber and the polymeric buffering layer.

3. An optical fiber unit according to Claim 1, wherein the buffered optical fiber unit is a tight-buffered optical fiber unit wherein th outer diameter of the optical fiber and the inner diameter of the polymeric buffering layer are essentially the same.

4. An optical fiber unit according to Claim 3, wherein:
the optical fiber is a multimode optical fiber complying with the ITU-T G.651.1 recommendation;
the multimode optical fiber has macrobending losses greater than 0.1 dB at a wavelength of 850 nanometers for a winding of two turns around a spool with a bending radius of 15 millimeters;
the multimode optical fiber has macrobending losses greater than 0.3 dB at a wavelength of 1300 nanometers for a winding of two turns around a spool with a bending radius of 15 millimeters; and
the optical fiber unit has, at a wavelength of 1300 nanometers, attenuation less than 0.6 dB/km as measured at -5°C after performing two temperature cycles from -5°C to 60°C.

5. An optical fiber unit according to Claim 3, wherein the optical fiber is a single-mode optical fiber; and as measured at -5°C after performing two temperature cycles from -40°C to 70°C, the optical fiber unit has attenuation (i) less than 0.5 dB/km at a wavelength of 1310 nanometers and (ii) less than 0.3 dB/km at a wavelength of 1550 nanometers.

6. An optical fiber unit according to any of the preceding claims, wherein the inner diameter of the polymeric buffering layer is no more than 30 microns greater than the outer diameter of the optical fiber.

7. An optical fiber unit according to Claim 6, wherein:
the optical fiber is a single-mode optical fiber that (i) complies with the ITU-T G.652.D recommendation but (ii) complies with neither the ITU-T G.657.A recommendation nor the ITU-T G.657.B recommendation; and
as measured at -5°C after performing two temperature cycles from -5°C to 60°C, the optical fiber unit has attenuation (i) less than 0.5 dB/km at a wavelength of 1310 nanometers and (ii) less than 0.3 dB/km at a wavelength of 1550 nanometers.

8. An optical fiber unit according to any one of Claims 1-3 and 6, wherein:
the optical fiber is a multimode optical fiber complying with the ITU-T G.651.1 recommendation;
the multimode optical fiber has macrobending losses greater than 0.1 dB at a wavelength of 850 nanometers for a winding of two turns around a spool with a bending radius of 15 millimeters;
the multimode optical fiber has macrobending losses greater than 0.3 dB at a wavelength of 1300 nanometers for a winding of two turns around a spool with a bending radius of 15 millimeters; and
the optical fiber unit has, at a wavelength of 1300 nanometers, attenuation less than 1 dB/km as measured at -5°C after performing two temperature cycles from -5°C to 60°C.

9. An optical fiber unit according to any one of the preceding Claims, wherein the polymeric buffering layer has a Shore A hardness of at least 90.

10. An optical fiber unit according to any one of the preceding Claims, wherein the aliphatic amide slip agent is incorporated into the polymeric buffering layer in an amount less than 5000 ppm, preferably less than 3000 ppm.

11. An optical fiber unit according to any one of the preceding Claims, wherein the aliphatic amide slip agent is incorporated into the polymeric buffering layer in an amount between 200 ppm and 2000 ppm.

12. An optical fiber unit according to any one of the preceding Claims, wherein the aliphatic amide slip agent is incorporated into the polymeric buffering layer in an amount between 750 ppm and 1250 ppm.

## Patentansprüche

1. Eine gepufferte optische Fasereinheit, umfassend:
- eine optische Faser, umfassend eine Glasfaser, die zusammenhängend von einer Lichtleitfaserbeschichtung umgeben ist, die eine oder mehrere Beschichtungsschicht/en enthält; und
- eine polymere Pufferschicht, die die optische Faser umgibt, wobei die polymere Pufferschicht eine innere Oberfläche definiert, wobei die polymere Pufferschicht ein aliphatisches Amid-Gleitadditiv in einer Menge enthält, die ausreichend ist, damit mindestens ein Teil des aliphatisches Amid-Gleitadditivs zur inneren Oberfläche der polymere Pufferschicht migriert, so dass mindestens 15 Zentimeter der polymeren Pufferschicht von der optischen Faser in einem einzigen Vorgang unter Verwendung einer Abstreifkraft von weniger als 10 N entfernt werden können;
- wobei der innere Durchmesser der polymeren Pufferschicht nicht mehr als 60 Mikrometer größer ist als der äußere Durchmesser der optischen Faser.

2. Eine optische Fasereinheit nach Anspruch 1, wobei die gepufferte optische Fasereinheit eine zugentlastete, d.h. semi-tight, optische Fasereinheit ist, wobei die gepufferte optische Fasereinheit ferner eine Pufferlücke zwischen der optischen Faser und der polymeren Pufferschicht aufweist.

3. Eine optische Fasereinheit nach Anspruch 1, wobei die gepufferte optische Fasereinheit eine voll, d.h. tight, gepufferte optische Fasereinheit ist, bei der der äußere Durchmesser der optischen Faser und der innere Durchmesser der polymeren Pufferschicht im Wesentlichen gleich sind.

4. Eine optische Fasereinheit nach Anspruch 3, wobei:
- die optische Faser eine optische Mehrmodenfaser ist, die die Normempfehlung ITU-T G.651.1 erfüllt;
- die optische Mehrmodenfaser Makrobiegungsverluste von mehr als 0,1 dB bei einer Wellenlänge von 850 Nanometern für eine Wicklung von zwei Windungen um eine Spule mit einem Biegeradius von 15 Millimetern aufweist;
- die optische Mehrmodenfaser Makrobiegungsverluste von mehr als 0,3 dB bei einer Wellenlänge von 1300 Nanometern für eine Wicklung von zwei Windungen um eine Spule mit einem Biegeradius von 15 Millimetern aufweist; und
- die optische Fasereinheit bei einer Wellenlänge von 1300 Nanometern eine Dämpfung von weniger als 0,6 dB / km, gemessen bei -5 ° C nach Durchführung von zwei Temperaturzyklen von -5 ° C bis 60 ° C, aufweist.

5. Eine optische Fasereinheit nach Anspruch 3, wobei die optische Faser eine optische Monomodenfaser ist; und, gemessen bei -5 ° C nach Durchführung von zwei Temperaturzyklen von -40 ° C bis 70 ° C, die optische Fasereinheit eine Dämpfung (i) von weniger als 0,5 dB / km bei einer Wellenlänge von 1310 Nanometern und (ii) weniger als 0,3 dB / km bei einer Wellenlänge von 1550 Nanometern aufweist.

6. Eine optische Fasereinheit nach einem der vorhergehenden Ansprüche, wobei der innere Durchmesser der polymeren Pufferschicht nicht mehr als 30 Mikrometer größer als der äußere Durchmesser der optischen Faser ist.

7. Eine optische Fasereinheit nach Anspruch 6, wobei:
- die optische Faser eine optische Monomodenfaser ist, die (i) die Normempfehlung ITU-T G.652.D erfüllt, aber (ii) weder die Normempfehlung ITU-T G.657.A noch die Normempfehlung ITU-T G.657. B erfüllt; und
- gemessen bei -5 ° C nach Durchführung von zwei Temperaturzyklen von -5 ° C bis 60 ° C, die optische Fasereinheit eine Dämpfung (i) von weniger als 0,5 dB / km bei einer Wellenlänge von 1310 Nanometern und (ii) weniger als 0,3 dB / km bei einer Wellenlänge von 1550 Nanometern aufweist.

8. Eine optische Fasereinheit nach einem der Ansprüche 1 bis 3 und 6, wobei:
- die optische Faser eine optische Mehrmodenfaser ist, die die Normempfehlung ITU-T G.651.1 erfüllt;
- die optische Mehrmodenfaser Makrobiegungsverluste von mehr als 0,1 dB bei einer Wellenlänge von 850 Nanometern für eine Wicklung von zwei Windungen um eine Spule mit einem Biegeradius von 15 Millimetern aufweist;
- die optische Mehrmodenfaser Makrobiegungsverluste von mehr als 0,3 dB bei einer Wellenlänge von 1300 Nanometern für eine Wicklung von zwei Windungen um eine Spule mit einem Biegeradius von 15 Millimetern aufweist; und
- die optische Fasereinheit bei einer Wellenlänge von 1300 Nanometern eine Dämpfung von weniger als 1 dB / km aufweist, gemessen bei -5 ° C nach Durchführung von zwei Temperaturzyklen von -5 ° C bis 60 ° C.

9. Eine optische Fasereinheit nach einem der vorhergehenden Ansprüche, wobei die polymere Pufferschicht eine Shore-A-Härte von mindestens 90 aufweist.

10. Eine optische Fasereinheit nach einem der vorhergehenden Ansprüche, wobei das aliphatische Amid-Gleitadditiv in einer Menge von weniger als 5000 ppm, vorzugsweise weniger als 3000 ppm, in der polymeren Pufferschicht enthalten ist.

11. Eine optische Fasereinheit nach einem der vorhergehenden Ansprüche, wobei das aliphatische Amid-Gleitadditiv in einer Menge zwischen 200 ppm und 2000 ppm in der polymeren Pufferschicht enthalten ist.

12. Eine optische Fasereinheit nach einem der vorhergehenden Ansprüche, wobei das aliphatisches Amid-Gleitadditiv in einer Menge zwischen 750 ppm und 1250 ppm in der polymeren Pufferschicht enthalten ist.

## Revendications

1. Unité de fibre optique gainée, comprenant :
une fibre optique, comprenant une fibre de verre entourée de manière contiguë par un revêtement de fibre optique comportant une ou plusieurs couche(s) de revêtement ; et
une couche de gainage polymère entourant la fibre optique, la couche de gainage polymère définissant une surface interne, la couche de gainage polymère comportant un agent glissant d'amide aliphatique en une quantité suffisante pour qu'au moins une partie de l'agent glissant d'amide aliphatique migre vers la surface interne de la couche de gainage polymère de sorte qu'au moins 15 centimètres de la couche de gainage polymère puissent être retirés de la fibre optique en une seule opération en utilisant une force de dénudage inférieure à 10 N ;
dans laquelle le diamètre interne de la couche de gainage polymère est supérieur de pas plus de 60 microns au diamètre extérieur de la fibre optique.

2. Unité de fibre optique selon la revendication 1, dans laquelle l'unité de fibre optique gainée est une unité de fibre optique à gaine semi-serrée où l'unité de fibre optique gainée comprend en outre un espace de gainage entre la fibre optique et la couche de gainage polymère.

3. Unité de fibre optique selon la revendication 1, dans laquelle l'unité de fibre optique gainée est une unité de fibre optique à gaine serrée, où le diamètre externe de la fibre optique et le diamètre interne de la couche de gainage polymère sont essentiellement identiques.

4. Unité de fibre optique selon la revendication 3, dans laquelle :
la fibre optique est une fibre optique multimode conforme à la norme ITU-T G.651.1 ;
la fibre optique multimode présente des pertes de macrocourbure supérieures à 0,1 dB à une longueur d'onde de 850 nanomètres pour un enroulement de deux spires autour d'une bobine avec un rayon de courbure de 15 millimètres ;
la fibre optique multimode a des pertes de macrocourbure supérieures à 0,3 dB à une longueur d'onde de 1300 nanomètres pour un enroulement de deux spires autour d'une bobine avec un rayon de courbure de 15 millimètres ; et
l'unité de fibre optique a, à une longueur d'onde de 1300 nanomètres, une atténuation inférieure à 0,6 dB/km telle que mesurée à -5°C après avoir effectué deux cycles de température allant de -5°C à 60°C.

5. Unité de fibre optique selon la revendication 3, dans laquelle la fibre optique est une fibre optique monomode ; et telle que mesurée à -5°C après avoir effectué deux cycles de température allant de -40°C à 70°C, l'unité de fibre optique a une atténuation (i) inférieure à 0,5 dB/km à une longueur d'onde de 1310 nanomètres et (ii) inférieure à 0,3 dB/km à une longueur d'onde de 1550 nanomètres.

6. Unité de fibre optique selon l'une des revendications précédentes, dans laquelle le diamètre interne de la couche de gainage polymère est supérieur de pas plus de 30 microns au diamètre externe de la fibre optique.

7. Unité de fibre optique selon la revendication 6, dans laquelle :
la fibre optique est une fibre optique monomode qui (i) est conforme à la norme ITU-T G.652.D mais (ii) n'est conforme ni à la norme ITU-T G.657.A ni à la norme ITU-T G.657.B ; et
telle que mesurée à -5°C après avoir effectué deux cycles de température allant de -5°C à 60°C, l'unité de fibre optique a une atténuation (i) inférieure à 0,5 dB/km à une longueur d'onde de 1310 nanomètres et (ii) inférieure à 0,3 dB/km à une longueur d'onde de 1550 nanomètres.

8. Unité de fibre optique selon l'une quelconque des revendications 1 à 3 et 6, dans laquelle :
la fibre optique est une fibre optique multimode conforme à la norme ITU-T G.651.1 ;
la fibre optique multimode présente des pertes de macrocourbure supérieures à 0,1 dB à une longueur d'onde de 850 nanomètres pour un enroulement de deux spires autour d'une bobine avec un rayon de courbure de 15 millimètres ;
la fibre optique multimode présente des pertes de macrocourbure supérieures à 0,3 dB à une longueur d'onde de 1300 nanomètres pour un enroulement de deux spires autour d'une bobine avec un rayon de courbure de 15 millimètres ; et
l'unité de fibre optique a, à une longueur d'onde de 1300 nanomètres, une atténuation inférieure à 1 dB/km telle que mesurée à -5°C après avoir effectué deux cycles de température allant de -5°C à 60°C.

9. Unité de fibre optique selon l'une quelconque des revendications précédentes, dans laquelle la couche de gainage polymère a une dureté Shore A d'au moins 90.

10. Unité de fibre optique selon l'une quelconque des revendications précédentes, dans laquelle l'agent glissant d'amide aliphatique est incorporé dans la couche de gainage polymère en une quantité inférieure à 5000 ppm, de préférence inférieure à 3000 ppm.

11. Unité de fibre optique selon l'une quelconque des revendications précédentes, dans laquelle l'agent glissant d'amide aliphatique est incorporé dans la couche de gainage polymère en une quantité comprise entre 200 ppm et 2000 ppm.

12. Unité de fibre optique selon l'une quelconque des revendications précédentes, dans laquelle l'agent glissant d'amide aliphatique est incorporé dans la couche de gainage polymère en une quantité comprise entre 750 ppm et 1250 ppm.
